# EUROPÄISCHE PATENTSCHRIFT

(11) **EP 3 812 186 B1**
(45) Veröffentlichungstag und Bekanntmachung des Hinweises auf die Patenterteilung: **06.12.2023**
(21) Anmeldenummer: 20193159.9
(22) Anmeldetag: 27.08.2020
(51) Int. Cl.: B60J 5/06, B60J 7/10, B60P 7/08

(54) **SEITENPLANENSPANNER**
SIDE TARPAULIN TENSIONER
TENDEUR POUR BÂCHES LATÉRALES

(30) Priorität: 23.10.2019 DE 102019128627
(43) Veröffentlichungstag der Anmeldung: 28.04.2021
(73) Patentinhaber: Franz Miederhoff oHG, 59846 Sundern (DE)
(72) Erfinder: PAPENHEIM, Josef, 59846 Sunderm (DE)
(74) Vertreter: Patentanwälte Dörner & Kötter PartG mbB

(56) Entgegenhaltungen:
- EP-A1- 3 453 547
- EP-A1- 3 453 547
- EP-A2- 1 642 683
- DE-U1-202016 101 450

## Beschreibung

Die Erfindung betrifft einen Seitenplanenspanner, insbesondere zum Spannen von Planen eines Nutzfahrzeugaufbaus, nach dem Oberbegriff des Patentanspruchs 1.

Ein Seitenplanenspanner der vorgenannten Art ist in der EP 3 453 547 A1 beschrieben. Dieser besteht aus einem, einen U-förmigen Querschnitt aufweisenden Spannhebel, der über einen Schwenkbolzen schwenkbar mit den Seitenwangen eines Grundkörpers verbunden ist. Der Grundkörper weist eine zwischen den Seitenwangen angeordnete Vorderwange auf, die der Aufnahme einer Gewindebolzen-Muttern-Kombination dient, deren Gewindebolzen durch eine Durchführung eines Haltebolzens durchführbar ist, der an einer zu spannenden Plane festlegbar ist. An dem Spannhebel ist ein Haken schwenkbar befestigt. Der Haken kann hinter einem Schenkel des Rahmenprofils eines Nutzfahrzeuges eingehängt werden und dient als Widerlager. In seiner offenen Stellung befindet sich der Spannhebel in einer vollständig aufgeschwenkten Stellung. In dieser Stellung wird der Haken an einem Schenkel des Rahmenprofils eingehängt. Beim Schließen des Spannhebels erfolgt eine gegeneinander gerichtete Relativbewegung zwischen dem an dem Spannhebel angelenkten Haken und dem mit der Gewindestange verbundenen, an der Plane befestigten Block, so dass die Plane im Zuge dieser Bewegung gespannt wird. Um ein ungewolltes Öffnen des Spannhebels zu vermeiden sind an die Seitenwangen Nasen angeformt, die in dieser geschlossenen Stellung jeweils eine an den Grundkörper angeformte Federzunge hintergreifen.

Seitenplanenspanner der vorgenannten Art haben sich in der Praxis bewährt. Es hat sich jedoch gezeigt, dass die Rastverbindung zwischen Nasen und Federzungen insbesondere bei neuen Seitenplanenspannern manchmal schwer zu lösen sind. Darüber hinaus besteht die Gefahr einer Ermüdung der an den Grundkörper angeformten Federzungen bei fortschreitendem Gebrauch.

Vor diesem Hintergrund liegt der Erfindung die Aufgabe zugrunde, einen Seitenplanenspanner bereitzustellen, der eine verbesserte Sicherung vor selbsttätigem Öffnen aufweist. Gemäß dieser Erfindung wird diese Aufgabe durch einen Seitenplanenspanner mit den Merkmalen des kennzeichnenden Teils des Patentanspruchs 1 gelöst.

Mit der Erfindung ist ein Seitenplanenspanner bereitgestellt, der eine verbesserte Sicherung vor selbsttätigem Öffnen aufweist. Dadurch, dass wenigstens ein erstes Rastelement durch ein schwenkbar gelagertes Winkelstück gebildet ist, das über ein Federelement in Schließrichtung vorgespannt ist, ist eine zuverlässige Rastverbindung gewährleistet. Durch die Vorspannung des Federelements wird das erste Rastelement in der Rastposition gehalten, wodurch ein selbststätiges Lösen der Rastverbindung verhindert ist.

In Weiterbildung der Erfindung ist das Federelement durch eine Schenkelfeder gebildet. Hierdurch ist eine kostengünstige und zugleich platzsparende Aufbringung einer Federvorspannung auf das schwenkbar gelagerte Winkelstück in Schließrichtung erzielt. Vorzugsweise ist das Federelement, insbesondere die Schenkelfeder lösbar an dem Spannbügel angeordnet. Hierdurch ist ein einfacher Austausch eines defekten oder ermüdeten Federelements ermöglicht.

In Ausgestaltung der Erfindung weist der Spannbügel zwei in Richtung des Grundkörpers rechtwinklig angestellte Seitenflügel auf, zwischen denen eine dritte Schwenkachse angeordnet ist, auf der das wenigstens eine Winkelstück schwenkbar gelagert ist. Hierdurch ist eine definierte Schwenkachse für das wenigstens eine Winkelstück erzielt.

In weiterer Ausgestaltung der Erfindung weist das wenigstens eine Winkelstück einen C-förmigen Abschnitt auf, der in Schließstellung das zweite Rastelelement hintergreift. Hierdurch ist eine zuverlässige Rastverbindung gewährleistet.

In Weiterbildung der Erfindung weist der Spannbügel eine Einsenkung oder einen Durchbruch auf, in den ein an dem Winkelstück angeformter Betätigungsabschnitt einschwenkbar ist. Hierdurch ist der Schwenkraum des Betätigungsabschnitts vergrößert, wodurch dessen Schwenkbetätigung erleichtert ist.

Gemäß der Erfindung sind zwei Winkelstücke angeordnet, die über einen Querbügel miteinander verbunden sind, über den die Winkelstücke schwenkbar sind. Hierdurch ist eine gleichzeitige Betätigung der Winkelstücke ermöglicht.

In weiterer Ausgestaltung der Erfindung sind die Winkelstücke und der Querbügel Bestandteil eines einstückigen Schließbügels, der vorzugsweise aus Federdraht hergestellt ist. Hierdurch ist eine bauraumsparende, kostengünstige Herstellung ermöglicht.

In Weiterbildung der Erfindung ist das wenigstens eine zweite Rastelement durch ein eine Rastnase aufweisendes Hakenteil gebildet. Hierdurch ist eine einfache und zugleich zuverlässige Rastverbindung erzielt.

In Ausgestaltung der Erfindung ist die Rastnase mit einer Schräge versehen, die in dem Hinterschnitt der Rastnase des Hakenteils mündet. Hierdurch ist ein einfaches Hineingleiten des ersten Rastelements in den Hinterschnitt zur Herstellung einer Rastverbindung erzielt.

In Ausgestaltung der Erfindung ist das Hakenteil durch ein aus dem Grundkörper ausgeklinktes Blechstück gebildet. Hierdurch ist die Ausbildung des Hakenteils durch einen einfachen Stanzbiegevorgang ermöglicht, wodurch die Herstellung vereinfacht ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Seitenplanenspanners in geöffneter Stellung und
- Figur 2: die Darstellung des Federspanners aus Figur 1 in Schließstellung.

Der als Ausführungsbeispiel gewählte Seitenplanenspanner besteht im Wesentlichen aus einem Grundkörper 1, in dem ein Spannbügel 2 schwenkbar gelagert ist, der einen Schließbügel 8 aufnimmt und der wiederum schwenkbar mit einem Haken 3 verbunden ist. An dem Grundkörper 1 ist eine Bördelmutter 4 befestigt, die eine Hammerkopfschraube 6 aufnimmt, die durch die Durchführung eines Planenwinkels 5 geführt ist.

Der Grundkörper 1 ist im Ausführungsbeispiel als Blechstanzbiegeteil ausgebildet. Er besteht im Wesentlichen aus einer Grundplatte 11, an dessen beiden Längsseiten jeweils eine Seitenwange 12 rechtwinklig angestellt ist. In den Seitenwangen 12 ist jeweils eine erste Bohrung 13 sowie eine beabstandet zu dieser angeordnete Verplombungsbohrung 14 eingebracht. Die fluchtend zueinander angeordneten ersten Bohrungen 13 dienen der Aufnahme eines Achsbolzens 7 zur schwenkbaren Lagerung des Spannbügels 2. Die Grundplatte 11 ragt über die Seitenwangen 12 hinaus. Der hierdurch begrenzte, auskragende Verklemmsteg 111 unterstützt die Verklemmung des S-Schlages der zu spannenden Plane über den Haken 3.

An ihrem dem Verklemmsteg 111 gegenüberliegenden Ende ist an die Grundplatte 11 eine rechtwinklig abgewinkelte Vorderwange 15 angeformt, die mittig mit einer Bohrung versehen ist, durch die der Bördelkragen einer Bördelmutter 4 geführt ist, die sodann verbördelt ist, wodurch die Bördelmutter 4 an der dem Verklemmsteg 111 zugewandten Seite der Vorderwange 15 befestigt ist.

Beabstandet zur Vorderwange 15 sind auf der Grundplatte 11 zwei mit einer Rastnase 161 versehene Hakenteile 16 angeordnet. Im Ausführungsbeispiel sind die Hakenteile 16 jeweils durch ein aus der Grundplatte 11 ausgeklinktes Blechstück gebildet. Die Rastnasen 161 der Hakenteile 16 sind jeweils mit einer Schräge 162 versehen, die in dem Hinterschnitt der Rastnase 161 mündet.

Der Spannbügel 2 besteht im Wesentlichen aus einer Deckplatte 21, die an ihren beiden Längsseiten mit rechtwinklig zu dieser angestellten Seitenflügeln 22 versehen ist, welche die Deckplatte 21 in ihrer Länge überragen. In dem die Deckplatte 21 überragenden Abschnitt der Seitenflügel 22 ist in diese jeweils endseitig eine erste Bohrung 23 sowie beabstandet zu dieser eine zweite Bohrung 24 eingebracht. Weiterhin ist wiederum beabstandet zur zweiten Bohrung 24 eine Verplombungsbohrung 25 in den Seitenflügeln 22 angeordnet.

Auf der der Verplombungsbohrung 25 zugewandten Seite ist zwischen den Seitenflügeln 22 eine Schwenkachse 26 zur Aufnahme des Schließbügels 8 angeordnet. Weiterhin ist in die Deckplatte 21 ein Durchbruch 27 zur Aufnahme des Querbügels 82 des Schließbügels 8 eingebracht. Der Durchbruch 27 ist derart dimensioniert, dass der Schließbügel 8 in Schließstellung parallel zur Kontur des Durchbruchs 27 in geringem Abstand zu dieser verläuft.

Der Haken 3 ist im Wesentlichen in Form eines gekrümmten Blechstreifens ausgebildet, der an einem Ende in einen Flanschabschnitt 31 übergeht. Der Flanschabschnitt 31 ist im Wesentlichen eben ausgebildet und an seinen Längsseiten mit rechtwinklig nach innen angestellten Ösen versehen, über die der Haken 3 schwenkbar mit dem Spannbügel 2 verbunden ist. Zur Stabilisierung des Hakens 3 ist dieser an der Außenseite seines gekrümmten Bereichs mit Sicken 32 versehen.

Der Schließbügel 8 ist im Ausführungsbeispiel aus einem Federstahldraht mittels eines Umformprozesses hergestellt und weist zwei gegenüberliegend angeordnete Winkelstücke 81 auf, die über einen Querbügel 82 verbunden sind. Die Winkelstücke 81 sind im Wesentlichen als C-förmige Abwinklung des Federdrahtes ausgebildet, die in den Querbügel 82 übergehen. Der Schließbügel 8 ist in Bereich seiner beiden Winkelstücke 81 jeweils mit einem Schenkel einer Schenkelfeder 9 verbunden, deren anderer Schenkel an der Unterseite der Deckplatte 21 anliegt. Über die Schenkelfedern 9 ist der Schließbügel in Schließrichtung vorgespannt.

Der Spannbügel 2 ist derart in dem Grundkörper 1 eingebracht, dass dessen Seitenflügel 22 innen an den Seitenwangen 12 des Grundkörpers 1 anliegen, wobei durch die miteinander fluchtenden ersten Bohrungen 13, 23 der Seitenwangen 12 sowie der Seitenflügel 22 ein Achsbolzen 7 geführt ist. Der Achsbolzen 7 bildet die Schwenkachse, um welche der Spannbügel 2 relativ zum Grundkörper 1 verschwenkbar ist. Alternativ ist auch eine schwenkbare Lagerung über durch die ersten Bohrungen 13, 23 geführte Nieten möglich.

Der Schließbügel 8 liegt mit seinen C-förmig abgewinkelten Winkelstücken 81 schwenkbar auf der Schwenkachse 26 auf und ist über die Schenkelfedern 9 auf dieser in Schließrichtung vorgespannt gehakten. Dabei ist der Querbügel 82 in dem Durchbruch 28 im Wesentlichen parallel zu dessen Innenmantelfläche positioniert.

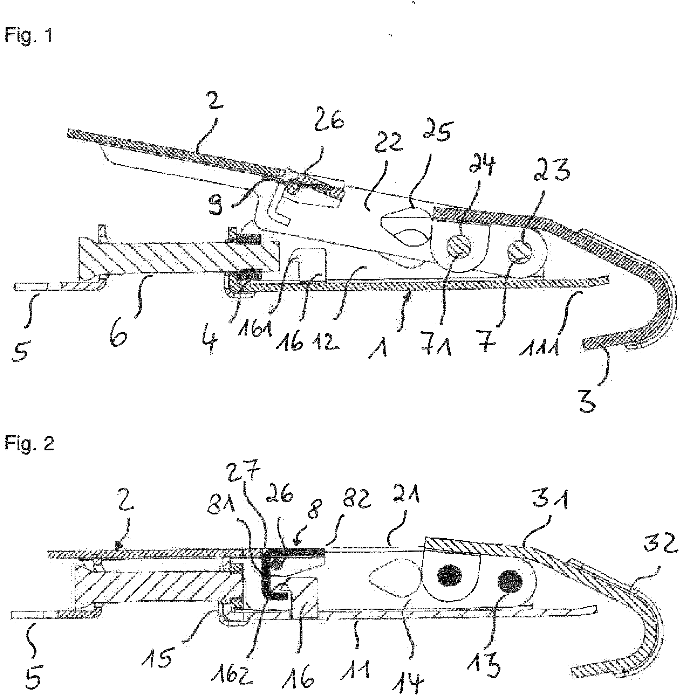

Der Spannbügel 2 ist derart in dem Grundkörper 1 positioniert, dass bei einem Verschwenken des Spannbügels 2 in Richtung der Vorderwange 15 (Schließrichtung) die Winkelstücke 81 entlang der Schrägen 162 der Rastnasen 161 gleiten, bis sie diese hintergreifend, über die Schenkelfedern 9 vorgespant, an den Rastnasen anliegen. Der Seitenplanenspanner ist so verriegelt - ein selbsttätiges Öffnen ist verhindert (Figur 2). Dabei fluchten die Verplombungsbohrungen 14, 25 vom Grundkörper und Spannbügel, sodass ein Zollverschluss ermöglicht ist.

Der Haken 3 ist derart zwischen den Seitenflügeln 22 des Spannbügels 2 angeordnet, dass dessen Ösen mit den zweiten Bohrungen 24 der Seitenflügel 22 fluchten, wobei durch diese ein zweiter Achsbolzen 71 geführt ist, über den der Haken 3 relativ zum Spannbügel 2 verschwenkbar gelagert ist. Durch die Bohrung der Vorderwange 15 hindurch ist eine Hammerkopfschraube 6 in die Bördelmutter 4 eingeschraubt, die zuvor durch die Durchführung des Planenwinkels 5 hindurchgeführt ist.

Zur Entriegelung des Spannbügels 2 wird der Querbügel 82 durch den Durchbruch 27 hindurchgedrückt, wodurch die Winkelstücke 81 entgegen der Vorspannung der Schenkelfedern 9 verschwenkt und so außer Eingriff mit den Rastnasen 161 gebracht werden (Figur 1). Der Seitenplanenspanner ist nun entriegelt - ein einfaches Verschwenken des Spannbügels in eine Öffnungsstellung ist wieder ermöglicht. Nach Entfernen der auf den Querbügel 82 einwirkenden Druckkraft wird dieser durch die Vorspannkraft der Schenkelfedern 9 wieder in seine Ursprungsposition verbracht.

## Patentansprüche

1. Seitenplanenspanner, umfassend einen zwei parallele Seitenwangen (12) aufweisenden Grundkörper (1), einen als einarmiger Hebel ausgebildeten Spannbügel (2), der um eine zwischen den Seitenwangen (12) des Grundkörpers (1) orthogonal zu diesen verlaufende erste Schwenkachse schwenkbar gelagert ist, sowie ein Hakenteil (3) zum Hintergreifen eines gegenüber der zu spannenden Plane als Widerlager dienenden ortsfesten Halteelements, das um eine zwischen den Seitenwangen (12) verlaufende, parallel zur ersten Schwenkachse verlaufende zweiten Schwenkachse schwenkbar gelagert ist, wobei an dem Spannbügel (2) wenigstens ein erstes Rastelement angeordnet ist, das zur Sicherung gegenüber selbsttätigem Öffnen in Verschlussstellung des Spannbügels (2) mit einem an dem Grundkörper (1) angeordneten zweiten Rastelement verrastbar ist, **dadurch gekennzeichnet, dass** wenigstens ein erstes Rastelement durch ein schwenkbar gelagertes Winkelstück (81) gebildet ist, das über ein Federelement in Schließrichtung vorgespannt ist, wobei zwei Winkelstücke (81) angeordnet sind, die über einen Querbügel miteinander verbunden sind, der einen Betätigungsabschnitt bildet, über den die Winkelstücke schwenkbar sind.

2. Seitenplanenspanner nach Anspruch 1, **dadurch gekennzeichnet, dass** das Federelement durch eine Schenkelfeder (9) gebildet ist.

3. Seitenplanenspanner nach Anspruch 1 oder 2, **dadurch gekennzeichnet, dass** der Spannbügel (2) zwei in Richtung des Grundkörpers (1) rechtwinklig angestellte Seitenflügel aufweist, zwischen denen eine Schwenkwelle (26) angeordnet ist, auf der das wenigstens eine Winkelstück (81) schwenkbar gelagert ist.

4. Seitenplanenspanner nach einem der vorgenannten Ansprüche, **dadurch gekennzeichnet, dass** das wenigstens eine Winkelstück (81) einen C-förmigen Abschnitt aufweist, der in Schließstellung das zweite Rastelement hintergreift.

5. Seitenplanenspanner nach einem der vorgenannten Ansprüche, **dadurch gekennzeichnet, dass** der Spannbügel (2) einen Durchbruch (27) aufweist, in den ein an dem wenigstens einen Winkelstück (81) angeformter Betätigungsabschnitt einschwenkbar ist.

6. Seitenplanenspanner nach einem der vorgenannten Ansprüche, **dadurch gekennzeichnet, dass** die Winkelstücke (81) und der Querbügel (82) Bestandteil eines einstückigen Drahtbügels sind, der vorzugsweise aus Federdraht hergestellt ist.

7. Seitenplanenspanner nach einem der vorgenannten Ansprüche, **dadurch gekennzeichnet, dass** das wenigstens eine zweite Rastelement durch ein eine Rastnase (161) aufweisendes Hakenteil (16) gebildet ist.

8. Seitenplanenspanner nach Anspruch 7, **dadurch gekennzeichnet, dass** die Rastnase (161) mit einer Schräge (162) versehen ist, die in dem Hinterschnitt der Rastnase (161) des Hakenteils (16) mündet.

9. Seitenplanenspanner nach Anspruch 7 oder 8, **dadurch gekennzeichnet, dass** das wenigstens eine Hakenteil (16) durch ein aus dem Grundkörper (1) ausgeklinktes Blechstück gebildet ist.

## Claims

1. Side tarpaulin tensioner comprising a base body (1) with two parallel side cheeks (12), a tensioning bracket (2) designed as a single-arm lever, which is pivotably mounted about a first pivot axis extending between the side cheeks (12) of the base body (1) orthogonally thereto, as well as a hook part (3) for engaging behind a stationary holding element serving as an abutment with respect to the tarpaulin to be tensioned, which holding element is pivotably mounted about a second pivot axis extending between the side cheeks (12) parallel to the first pivot axis, wherein at least one first latching element is arranged on the tensioning bracket (2), which can be latched with a second latching element arranged on the base body (1) for securing against automatic opening in the closed position of the tensioning bracket (2), **characterised in that** at least one first latching element is formed by a pivotably mounted angle piece (81), which is pretensioned in the closing direction via a spring element, wherein two angle pieces (81) are arranged, which are connected to one another via a transverse bracket, which forms an actuating section, via which the angle pieces are pivotable.

2. Side tarpaulin tensioner according to claim 1, **characterised in that** the spring element is formed by a leg spring (9).

3. Side tarpaulin tensioner according to claim 1 or 2, **characterised in that** the tensioning bracket (2) has two side wings set at right angles in the direction of the base body (1), between which a pivot shaft (26) is arranged, on which the at least one angle piece (81) is pivotably mounted.

4. Side tarpaulin tensioner according to one of the previous claims, **characterised in that** the at least one angle piece (81) has a C-shaped section, which engages behind the second latching element in the closed position.

5. Side tarpaulin tensioner according to one of the previous claims, **characterised in that** the tensioning bracket (2) has an opening (27), into which an actuating section moulded onto the at least one angle piece (81) can be pivoted.

6. Side tarpaulin tensioner according to one of the previous claims, **characterised in that** the angle pieces (81) and the transverse bracket (82) are part of a single-piece wire bracket, which is preferably made of spring wire.

7. Side tarpaulin tensioner according to one of the previous claims, **characterised in that** the at least one second latching element is formed by a hook part (16) having a latching lug (161).

8. Side tarpaulin tensioner according to claim 7, **characterised in that** the latching lug (161) is provided with a bevel (162), which opens into the undercut of the latching lug (161) of the hook part (16).

9. Side tarpaulin tensioner according to claim 7 or 8, **characterised in that** the at least one hook part (16) is formed by a piece of sheet metal notched out of the base body (1).

## Revendications

1. Tendeur pour bâche latérale, comprenant un corps de base (1) qui présente deux joues latérales parallèles (12), un étrier de tension (2) formé comme levier à un bras qui est logé de manière à pouvoir pivoter autour d'un premier axe pivotant entre les joues latérales (12) du corps de base (1) orthogonalement à ces dernières, ainsi qu'un crochet (3) pour venir en prise derrière un élément de support fixe servant de butée en face de la bâche à tendre, qui est logé de manière à pouvoir pivoter autour d'un deuxième axe pivotant situé entre les joues latérales (12) et parallèle au premier axe pivotant, sachant qu'au moins un premier élément d'encliquetage, qui peut être enclenché avec un deuxième élément d'encliquetage disposé sur le corps de base (1) pour assurer une protection contre l'ouverture automatique en position fermée de l'étrier de tension (2), est disposé sur l'étrier de tension (2), **caractérisé en ce qu'**au moins un premier élément d'encliquetage est formé par une pièce angulaire (81) logée de manière à pouvoir pivoter, qui est précontrainte dans le sens de la fermeture par le biais d'un élément à ressort, sachant que deux pièces angulaires (81) reliées l'une à l'autre par le biais d'un étrier transversal qui forme une section d'actionnement via lequel les pièces angulaires peuvent pivoter sont montées.

2. Tendeur pour bâche latérale selon la revendication 1, **caractérisé en ce que** l'élément à ressort est formé par un ressort à branches (9).

3. Tendeur pour bâche latérale selon la revendication 1 ou 2, **caractérisé en ce que** l'étrier de tension (2) présente deux ailes latérales appuyées rectangulairement en direction du corps de base (1), entre lesquelles un arbre pivotant (26) sur lequel au moins une pièce angulaire (81) est logée de manière à pouvoir pivoter est disposé.

4. Tendeur pour bâche latérale selon l'une des revendications précédentes, **caractérisé en ce qu'**au moins une pièce angulaire (81) présente une section en forme de C derrière laquelle le deuxième élément d'encliquetage vient en prise arrière en position de fermeture.

5. Tendeur pour bâche latérale selon l'une des revendications précédentes, **caractérisé en ce que** l'étrier de tension (2) présente une ouverture (27) dans laquelle une section d'actionnement formée sur au moins une pièce angulaire (81) est escamotable.

6. Tendeur pour bâche latérale selon l'une des revendications précédentes, **caractérisé en ce que** les pièces angulaires (81) et l'étrier transversal (82) font partie d'un étrier en fil d'un seul tenant, qui est de préférence fabriqué en fil de ressort.

7. Tendeur pour bâche latérale selon l'une des revendications précédentes, **caractérisé en ce qu'**au moins un deuxième élément d'encliquetage est formé par un crochet (16) qui présente un nez à encoche (161).

8. Tendeur pour bâche latérale selon la revendication 7, **caractérisé en ce que** le nez à encoche (161) est doté d'une inclinaison (162) qui débouche dans la contre-dépouille du nez à encoche (161) du crochet (16).

9. Tendeur pour bâche latérale selon la revendication 7 ou 8, **caractérisé en ce qu'**au moins un crochet (16) est formé par une pièce en tôle décrochée du corps de base (1).
